# EUROPEAN PATENT APPLICATION

(11) **EP 4 253 471 A1**
(43) Date of publication of application: **04.10.2023**
(21) Application number: 21896654.7
(22) Date of filing: 21.10.2021
(51) Int. Cl.: C08L 23/08, C08L 101/04, C08K 13/02, C08K 3/04, C08K 5/544, C08K 5/098, C08K 5/053

(54) **SEMI-CONDUCTIVE SHIELDING MATERIAL FOR HIGH-VOLTAGE CABLE, AND PREPARATION METHOD THEREFOR**

(30) Priority: 27.11.2020 CN 202011367181
(71) Applicant: Electric Power Research Institute. China Southern Power Grid, Guangzhou, Guangdong 510663 (CN); Shenzhen Power Supply Co., Ltd., Shenzhen, Guangdong 518001 (CN)
(72) Inventor: HOU, Shuai, Guangzhou, Guangdong 510663 (CN); LI, Xiaolin, Guangzhou, Guangdong 510663 (CN); FU, Mingli, Guangzhou, Guangdong 510663 (CN); ZHU, Wenbo, Guangzhou, Guangdong 510663 (CN); HUI, Baojun, Guangzhou, Guangdong 510663 (CN); FENG, Bin, Guangzhou, Guangdong 510663 (CN); ZHANG, Yifan, Guangzhou, Guangdong 510663 (CN); WU, Guoxing, Guangzhou, Guangdong 510663 (CN); XIE, Hong, Guangzhou, Guangdong 510663 (CN); CHEN, Xiao, Guangzhou, Guangdong 510663 (CN); XU, Shu, Guangzhou, Guangdong 510663 (CN)
(74) Representative: Hoffmann Eitle
(86) International application number: PCT/CN2021/125243
(87) International publication number: WO 2022/111152

(57) **Abstract**

The present invention provides a semi-conductive shielding material for high-voltage cable, and a preparation method thereof. The semi-conductive shielding material for high-voltage cable includes 100 parts by weight of an ethylene butyl acrylate resin, 25 to 40 parts by weight of conductive carbon black, and 4 to 8 parts by weight of functional auxiliary agents. The conductive carbon black includes high oil absorption value (OAV) conductive carbon black with an OAV ranging from 300ml/100g to 400ml/100g and low OAV conductive carbon black with an OAV ranging from 120ml/100g to 220ml/100g. The weight ratio of the high OAV conductive carbon black to the low OAV conductive carbon black is 1:(2~4). The high-voltage cable semi-conductive shielding material of the present invention has excellent electrical conductivity, mechanical performances, and peeling adhesion. In addition, it also solves the issue of adverse effects on the formability and mechanical performances of the semi-conductive shielding material for high-voltage cable that arise from adding a substantial amount of conductivity carbon black to attain the predetermined conductivity.

## Description

### TECHNICAL FIELD

The present invention relates to the field of polymer composite materials, in particular to semi-conductive shielding material for high-voltage cable and preparation method thereof.

### BACKGROUND

A power cable is composed of a metal conductor, a conductor shield, an insulation layer, an insulation shield, and a protective material. Among these, the semi-conductive shielding layer homogenizesthe electric field on the conductor surface uniform or serves the function of grounding, effectively preventing partial discharge between the conductor and the insulator or between the insulator and the metal sheath, thereby enhancing the service life of the cable.

The shielding material in the currently utilized cross-linked polyethylene (XLPE) insulated cables is mainly composed of an ethylene-vinyl acetate (EVA) copolymer matrix and conductive carbon used for forming a conductive network. However, EVA has insufficient thermal stability, and becomes problematic when utilized as a cable shielding material in applications rated at 110 kV or above. This is because the material may release a small amount of acidic substances under high voltage conditions, which can corrode copper conductors and significantly diminish the cable's lifespan.

The Chinese patent application No. 201711408418.6 discloses a graphene composite semi-conductive shielding material for medium- and high-voltage power cables, including 30-80 parts by weight of a polar polyolefin copolymer, 15-35 parts by weight of a mixture of graphene material and conductive carbon black, 0. 1-0.6 parts by weight of a lubricant, 0.2-1 part by weight of an antioxidant. The material effectively reduces the amount of conductive carbon black used in the shielding material, improves the extrusion performance of the shielding material and the surface smoothness of the shielding layer. However, the mechanical performances of the shielding material matrix are poor, and the addition of graphene leads to higher cost despite reducing the use of conductive carbon black.

### SUMMARY

The present invention aims to overcome the deficiencies in prior art and provide a semi-conductive shielding material for high-voltage cable and a preparation method thereof.

In order to achieve the above object, the present invention provides a semi-conductive shielding material for high-voltage cable, and the composition includes 100 parts by weight of an ethylene-butyl acrylate (EBA) resin, 25 to 40 parts by weight of conductive carbon black, and 4 to 8 parts by weight of functional auxiliary agents. The conductive carbon black includes high oil absorption value (OAV) conductive carbon black and low OAV conductive carbon black. The OAV of the high OAV conductive carbon black ranges from 300ml/100g to 400ml/100g. The OAV of the low OAV conductive carbon black ranges from 120ml/100g to 220ml/100g. The weight ratio between high OAV conductive carbon black and low OAV conductive carbon black is 1:(2~4).

The inventors found that by combining the EBA resin with the mixture of the conductive carbon black with OAV ranging from 300ml/100g to 400ml/100g and the conductive carbon black with OAV ranging from 120ml/100g to 220ml/100g, in the weight ratio of 1:(2-4), a semi-conductive shielding material for high-voltage cable with excellent electrical conductivity, mechanical performances, and peel adhesion can be prepared. This method circumvented the need to introduce a blend of graphene and carbon black into the resin for improving the electrical conductivity and mechanical performances of the shielding material, thus addressing the issue of the high cost associated with graphene. In addition, it also solves the issue of adverse effects on the formability and mechanical performances of the semi-conductive shielding material for high-voltage cable that arise from adding a large amount of conductivity carbon black to attain the necessary conductivity. The inventors also found that the synergism between the oil absorption value of the high OAV conductive carbon black and the oil absorption value of the low OAV conductive carbon black has a significant impact on the performance of the semi-conductive shielding material for high-voltage cable. The combination of the conductive carbon black with OAV ranging from 300ml/100g to 400ml/100g and the conductive carbon black with OAV greater than 220ml/100g will lead to a sharp decline in the mechanical performances of the formed high-voltage cable semi-conductive shielding material. The combination of the conductive carbon black with OAV ranging from 300ml/100g to 400ml/100g and the conductive carbon black with OAV smaller than 100ml/100g will have an adverse effect on the formability of the product. In addition, if the conductive carbon black with OAV ranging from 120ml/100g to 220ml/100g is used with the conductive carbon black with OAV greater than 500ml/100g, there will be numerous voids within conductive carbon black, which leads to a great loss in strength and mechanical performances of the product, despite the formation of conductive pathways to exhibit conductivity. If the conductive carbon black with OAV ranging from 120ml/100g to 220ml/100g is used with the conductive carbon black with OAV smaller than 300ml/100g, it is necessary to add a large amount of conductive carbon black in order to achieve the predetermined conductivity, which adversely affects the formability. In addition, if the conductive carbon black with the oil absorption value of 120ml/100g to 220ml/100g is used alone, a large amount of carbon black has to be added in order to achieve the electrical performance indexes of the semi-conductive shielding material, which will cause a great loss in formability and mechanical performances. Moreover, if the conductive carbon black with OAV ranging from 300ml/100g to 400ml/100g is used alone, the conductivity of the product will fluctuate significantly with change in the content of conductive carbon black, making it challenging to achieve a consistent and stable conductivity.

Preferably, the functional auxiliary agents include 2 to 3 parts by weight of a coupling agent, 0.2 to 0.5 parts by weight of an antioxidant, 2 to 3 parts by weight of a lubricant, and 0 to 1 part by weight of a dispersant.

Preferably, the coupling agent is silane coupling agent KH550.

Preferably, the antioxidant is at least one of antioxidant 1010 or antioxidant 168.

Preferably, the lubricant is one or more of pentaerythritol or zinc stearate.

In the above-described semi-conductive shielding material for a high-voltage cable, the silane coupling agent is used as the crosslinking agent between carbon black and the matrix resin, and zinc stearate and pentaerythritol are used as lubricants. The silane coupling agent can better combine carbon black with the matrix resin. Meanwhile, zinc stearate also exhibts synergistic effect as a lubricant, which demonstrates lubricating and dispersing functions during processing, and maximize the dispersion of the conductive carbon black, so that the materials are in a uniform state, the fluidity of the shielding material extrusion process is improved, and the surface finish of the final product for semi-conductive shielding materials.

Preferably, the dispersant is a fluorine-containing auxiliary agent (PPA).

Preferably, the EBA resin has an elongation at break ≥700% and a melt flow index less than 10g/min at 190°C and 2.16kg.

Preferably, the weight ratio of the EBA resin to the conductive carbon black is 100:(25 to 30).

The inventors found that in the semi-conductive shielding material for high-voltage cable, when the weight ratio of the EBA resin to the conductive carbon black is 100:(25 to 30), the semi-conductive shielding material for high-voltage cable has better mechanical performances.

The present invention also provides a method for preparing any of the above-described high-voltage cable semi-conductive shielding materials, and the method includes the following steps:
(1) providing the conductive carbon black, removing water therefrom, and mixing the conductive carbon black with functional auxiliary agents according to a weight ratio thereof;
(2) mixing the mixture obtained by step (1) with an EBA resin at 45°C to 50°C;
(3) melting and extruding the mixture obtained by step (2) through a twin-screw extruder, and then drawing into strips under water, pelleting, and drying to obtain the semi-conductive shielding material for high-voltage cable.

The beneficial effects of the present invention are as follows: The present invention provides a high-voltage cable semi-conductive shielding material and a preparation method thereof. The semi-conductive shielding material for high-voltage cable of the present invention has excellent electrical conductivity, mechanical performances, and peeling adhesion. Futhermore, this method avoids adding the mixture of graphene and carbon black in the resin for improving the electrical conductivity and mechanical performances and thus solves the high cost problem of graphene. In addition, it also solves the issue of adverse effects on the formability and mechanical performances of the semi-conductive shielding material for high-voltage cable that arise from adding a substantial amount of conductivity carbon black to attain the predetermined conductivity.

### DETAILED DESCRIPTION

In order to better illustrate the object, technical solutions, and advantages of the present invention, the present invention will be further described below in conjunction with specific examples.

### Example 1

As an example of the semi-conductive shielding material for a high-voltage cable of the present invention, the semi-conductive shielding material for a high-voltage cable includes 100 parts by weight of an EBA resin, 40 parts by weight of conductive carbon black, and a functional auxiliary agents. The functional auxiliary agents include 2 parts by weight of a coupling agent, 0.3 parts by weight of an antioxidant, 2 parts by weight of a lubricant, and 0.3 part by weight of a dispersant.

The conductive carbon black includes high OAV conductive carbon black and low OAV conductive carbon black. The OAV of the high OAV conductive carbon black is 390ml/100g. The OAV of the low OAV conductive carbon black is 140ml/100g. The weight ratio of the high OAV conductive carbon black to the low OAV conductive carbon black is 1:4.

The EBA resin is purchased from Repsol S. A. with the product model of 1770.

The low OAV conductive carbon black is purchased from Shandong Lianke Technology Co., Ltd. with the product model of LK2107, and the high OAV conductive carbon black is purchased from Chezacarb with the product model of AC80.

The coupling agent is the silane coupling agent KH550.

The antioxidant is a mixture of antioxidant 1010 and antioxidant 168 with the weight ratio of 2:1.

The lubricant is a mixture of zinc stearate and pentaerythritol with the weight ratio of 1:1.

The dispersant is the fluorine-containing auxiliary agent FX-5924 purchased from 3M Company in the United States.

The method for preparing the high-voltage cable semi-conductive shielding material of the present example includes the following steps:
(1) The conductive carbon black is put into a mixer according to the weight proportion, preheated at 80°C, 300r/min for 10min to remove moisture, and then add with the coupling agent, the antioxidant, the lubricant, and the dispersant, and mixed at 600r/min for 20min.
(2) The EBA resin is added to the conductive carbon black pretreatment mixture prepared by step (1) according to the weight proportion, and mixed evenly at 80°C and 1000r/min.
(3) The mixture obtained by step (2) is melted and extruded in a twin-screw extruder, and then subjected to underwater drawing, pelletizing, and drying to obtain the shielding material for a high-voltage cable.

### Example 2

As an example of the semi-conductive shielding material for a high-voltage cable of the present invention, the present example is different from Example 1 only in that the semi-conductive shielding material for high-voltage cable includes 100 parts by weight of an EBA resin, 30 parts by weight of conductive carbon black, and functional auxiliary agents. The functional auxiliary agents include 2 parts by weight of a coupling agent, 0.4 parts by weight of an antioxidant, 2 parts by weight of a lubricant, and 0.5 part by weight of a dispersant.

### Example 3

As an example of the semi-conductive shielding material for a high-voltage cable of the present invention, the present example is different from Example 1 only in that the semi-conductive shielding material for high-voltage cable includes 100 parts by weight of an EBA resin, 25 parts by weight of conductive carbon black, and functional auxiliary agents. The functional auxiliary agents include 2 parts by weight of a coupling agent, 0.4 parts by weight of an antioxidant, 2 parts by weight of a lubricant, and 0.5 part by weight of a dispersant.

### Example 4

As an example of the semi-conductive shielding material for high-voltage cable of the present invention, the present example is different from Example 1 only in that the semi-conductive shielding material for high-voltage cable includes 100 parts by weight of EBA resin, 30 parts by weight of conductive carbon black, and functional auxiliary agents. The functional auxiliary agents include 2 parts by weight of a coupling agent, 0.4 parts by weight of an antioxidant, 2 parts by weight of a lubricant, and 0.3 part by weight of a dispersant. The weight ratio of the high OAV conductive carbon black to the low OAV conductive carbon black is 1:3.

### Comparative example 1

As a comparative example of the semi-conductive shielding material for a high-voltage cable of the present invention, the present comparative example is different from Example 1 only in that all the conductive carbon black is low OAV conductive carbon black, and the OAV of the low OAV conductive carbon black is 140ml/100g.

### Comparative example 2

As a comparative example of the semi-conductive shielding material for high-voltage cable of the present invention, the present comparative example is different from Example 1 only in that all the conductive carbon black is high OAV conductive carbon black, and the OAV of the high OAV conductive carbon black is 390ml/100g.

### Comparative example 3

As a comparative example of the semi-conductive shielding material for a high-voltage cable of the present invention, the present comparative example is different from Example 1 only in that the conductive carbon black includes high OAV conductive carbon black and low OAV conductive carbon black, wherein the OAV of the high OAV conductive carbon black is 390ml/100g, and the OAV of the low OAV conductive carbon black is 230ml/100g.

### Comparative example 4

As a comparative example of the semi-conductive shielding material for a high-voltage cable of the present invention, the present comparative example is different from Example 1 only in that the conductive carbon black includes high OAV conductive carbon black and low OAV conductive carbon black, wherein the OAV of the high OAV conductive carbon black is 390ml/100g, and the OAV of the low OAV conductive carbon black is 100ml/100g.

### Performance Tests

The electrical performance and mechanical performances of the semi-conductive shielding materials of Examples 1 to 4 and Comparative Examples 1 to 4 were carried out.

**Table 1 Performances of semi-conductive shielding materials for high-voltage cables**

| Test item | Tensile strength (MPa) | Elongation at break (%) | Volume resistivity (Ω·cm) at 23°C | Volume Resistivity (Ω·cm) at 90°C | Peel strength |
|---|---|---|---|---|---|
| Test Method | GB/T 1040.2-2006 | GB/T 1040.2-2006 | GB/T 3048.3-2007 | GB/T 3048.3-2007 | GB/T 1040-1992 |
| Example 1 | 10.8 | 118.8 | 15.4 | 90.2 | Peelable |
| Example 2 | 12.6 | 146.3 | 50.3 | 272.4 | Peelable |
| Example 3 | 14.0 | 189.4 | 70.4 | 320.1 | Peelable |
| Example 4 | 13.4 | 151.4 | 30.3 | 193.2 | Peelable |
| Comparative example 1 | 10.3 | 110.6 | 70.3 | 462.5 | Peelable |
| Comparative example 2 | 8.4 | 30.2 | 3.2 | 15.4 | Peelable |
| Comparative example 3 | 9.5 | 50.3 | 6.5 | 38.2 | Peelable |
| Comparative example 4 | 10.8 | 176.5 | 90.8 | 582.4 | Peelable |
| Performance index | ≥12 | ≥150 | ≤100 | ≤350 | Peelable |

Finally, it should be noted that the above embodiments are only used to illustrate the technical solutions of the present invention rather than limit the protection scope of the present invention. Although the present invention has been described in detail with reference to the preferred embodiments, those of ordinary skill in the art should understand that, the technical solution of the present invention can be modified or equivalently replaced without departing from the spirit and scope of the technical solution of the present invention.

## Claims

1. A semi-conductive shielding material for a high-voltage cable, **characterized by** comprising 100 parts by weight of ethylene butyl acrylate resin, 25 to 40 parts by weight of conductive carbon black, and 4 to 8 parts by weight of functional auxiliary agents, wherein the conductive carbon black comprises high oil absorption value (OAV) conductive carbon black with an OAV ranging from 300ml/100g to 400ml/100g and low OAV conductive carbon black with an OAV ranging from 120ml/100g to 220ml/100g, and a weight ratio of the high OAV conductive carbon black to the low OAV conductive carbon black is 1:(2~4).

2. The semi-conductive shielding material according to claim 1, wherein the functional auxiliary agents comprise 2 to 3 parts by weight of a coupling agent, 0.2 to 0.5 parts by weight of an antioxidant, 2 to 3 parts by weight of a lubricant, and 0 to 1 part by weight of a dispersant.

3. The semi-conductive shielding material according to claim 2, wherein the coupling agent is silane coupling agent KH550.

4. The semi-conductive shielding material according to claim 2, wherein the antioxidant is at least one of antioxidant 1010 or antioxidant 168.

5. The semi-conductive shielding material according to claim 2, wherein the lubricant is one or more of pentaerythritol or zinc stearate.

6. The semi-conductive shielding material according to claim 2, wherein the dispersant is a fluorine-containing auxiliary agent.

7. The semi-conductive shielding material according to claim 1, wherein the ethylene butyl acrylate resin has an elongation at break ≥700% and a melt flow index less than 10g/min at 190°C and 2.16kg.

8. The semi-conductive shielding material according to claim 1, wherein a weight ratio of the ethylene butyl acrylate resin to the conductive carbon black is 100:(25 to 30).

9. A method for preparing the semi-conductive shielding material according to any one of claims 1 to 8, comprising following steps:
(1) providing the conductive carbon black, removing water therefrom, and mixing the conductive carbon black with functional auxiliary agents according to a weight ratio thereof;
(2) mixing the mixture obtained by step (1) with an ethylene butyl acrylate resin at 45°C to 50°C;
(3) melting and extruding the mixture obtained by step (2) through a twin-screw extruder, and then drawing into strips under water, pelleting, and drying to obtain the semi-conductive shielding material for high-voltage cable.
